# EUROPEAN PATENT APPLICATION

(11) **EP 1 538 642 A1**
(43) Date of publication of application: **08.06.2005**
(21) Application number: 04257441.8
(22) Date of filing: 30.11.2004
(51) Int. Cl.: H01G 9/035, H01G 9/02, H01G 9/00

(54) **Electrolytes for high voltage electrolytic capacitors**

(30) Priority: 01.12.2003 US 525985 P; 16.06.2004 US 868017
(71) Applicant: Wilson Greatbatch Technologies, Inc., Clarence, New York 14031-2033 (US)
(72) Inventor: Liu, Yanming, Clarence Center New York 14032 (US); Muffoletto, Barry C., Alden New York 14004 (US)
(74) Representative: Colmer, Stephen Gary

(57) **Abstract**

An electrolyte composition for electrolytic capacitors is described. The electrolyte composition comprises at least a solute comprising ammonium acetate, the salt of a weak inorganic acid, or the ammonium salt of a carboxylic acid having less than 10 carbon atoms; an additive; and water.

## Description

### CROSS REFERENCE TO RELATED APPLICATION

This application claims priority to U.S. provisional application Serial No. 60/525,985, filed on December 1, 2003.

### BACKGROUND OF THE INVENTION

### 1. Field of the Invention

This invention relates to an electrolyte for electrolytic capacitors and, more particularly, to an electrolyte for high voltage tantalum electrolytic capacitors.

### 2. Prior Art

Electrolytic capacitors are well known for use in a variety of electronic equipment such as consumer audio and video equipment, home appliances, power supplies, industrial electronics, military electronics, computers, telecommunication equipment, entertainment equipment, automotive devices, lighting ballasts, and medical devices. In general, electrolytic capacitors comprise an anode and a cathode separated by at least one layer of separator material impregnated with electrolyte.

The anode is a valve metal. Examples of valve metals include, but are not limited to, tantalum, aluminum, titanium, and niobium. The valve metals are coated with a layer of the corresponding oxide that serve as a dielectric. The oxide is normally formed by a technique known as anodizing. The oxide thickness is proportional to the anodizing voltage. The desired oxide thickness increases with the capacitor rated voltage and is often a function of rated operation temperature and other desired electrical properties and performance requirements. For a given dielectric and film thickness, the capacitance and energy of a capacitor are functions of the specific surface area of the anode. To increase the capacitor volumetric energy density, porous anodes are normally used. Examples include etched aluminum foils for an aluminum capacitor and pressed and sintered tantalum powder bodies for tantalum capacitor. The anode morphology is tailored according to the desired oxide thickness and capacitor working voltage to achieve the optimal capacitor volumetric energy density.

The cathode should have a high volumetric capacitance density in order to match the charge capacity of the anode and minimize capacitor volume. The cathode can be the same or a different material as the anode. For example, aluminum electrolytic capacitors normally contain highly etched aluminum foils, with or without a thin layer of oxide, as the cathode. Electrochemical-electrolytic hybrid capacitors contain cathodes of electrochemical capacitor materials such as ruthenium oxide.

While easy to manufacture, the electrolyte for an electrolytic capacitor is a critical component. It determines capacitor working voltage, equivalent series resistance (ESR), operation temperature range, and stability of the capacitor properties and performance during shelf life or operation. A good electrolyte for an electrolytic capacitor must have at least these properties: 1) electrochemical stability to withstand high voltage; 2) electrical conductivity to minimize capacitor ESR; 3) chemical stability to ensure stable lifetime electrical properties; 4) chemical compatibility with other capacitor components; 5) wide operation temperature range; and 6) low toxicity. Depending upon the capacitor type, design and size, the electrolyte is impregnated into the separator either before or after it is placed in the case. Details of capacitor design and assembly procedures vary with manufacturer.

High voltage and high-energy electrolytic capacitors are widely used in camera flashes, motors, power supplies, strobes, and cardiac defibrillators. High voltage capacitors require that the electrolyte support the rated high working voltage as well as be able to withstand momentary surge voltage. The electrolyte breakdown voltage must be substantially higher than the capacitor rated voltage and surge voltage. Insufficient or marginal voltage capability of an electrolyte results in high DC leakage, voltage or current spikes, and even catastrophic failure.

While meeting the voltage requirement, an electrolyte is also required to have good electrical conductivity to minimize capacitor ESR. The breakdown voltage and electric conductivity of a working electrolyte strongly depend on the electrolyte chemistry. The solutes normally play a major role in determining the breakdown voltage and electrical conductivity. For a given solvent/solute system, increasing the solute concentration increases electrical conductivity and decreases breakdown voltage. A good working electrolyte should, therefore, not only support the rated voltage, but also provide the highest possible electrical conductivity.

Unlike aluminum capacitors that are constructed with an anode foil/separator/cathode foil structure (wound or stacked), tantalum electrolytic capacitors using sintered tantalum powder as an anode have a relatively thick anode body. Such an anode configuration requires a working electrolyte having relatively higher electrical conductivity. To obtain the desired high conductivity, electrolytes for tantalum electrolytic capacitors normally contain high water content. Traditionally, wet tantalum capacitors use sulfuric acid solutions as the electrolyte. This electrolyte system has limited voltage capability. Sulfuric acid solutions also limit other capacitor components to those that are compatible with this material. Therefore, for high voltage tantalum capacitors, a new electrolyte with a relatively higher breakdown voltage is needed.

U.S. Patent No. 5,507,966 to Liu discloses an electrolyte composition for high voltage (over 400V) aluminum capacitors. The prior art electrolyte comprises: (1) an ammonium salt of a straight chain dicarboxylic acid or a branched chain di- or polycarboxylic acid, or mixtures thereof; (2) ethylene glycol; (3) a small amount of water; and (4) other additives.

According to the Liu patent, for high voltage aluminum capacitors the preferred length of the carbon chains in the straight chain dicarboxylic acid or branched chain di- or polycarboxylic acid is greater than 9 carbon atoms. These higher acids have limited solubility in water and, therefore, are not suitable as an aqueous electrolyte for a tantalum electrolytic capacitor. Plus, the conductivity of the electrolytes disclosed in the Liu patent is too low to be useful for tantalum capacitors having sintered powder pellet anodes.

U.S. Patent No. 4,762,630 to Shinozaki et al. relates to an electrolyte composition for aluminum or tantalum capacitors. The electrolyte composition comprises quaternary (1-4 alkyl group having 1-6 carbon atoms) ammonium salts of monocarboxylic acids (1-6 carbon atoms) dissolved in an aprotic solvent or a mixed solvent of an aprotic solvent and a protic solvent. However, Shinozaki et al. explicitly teach away from an ammonium salt of monocarboxylic acid being incorporated into an aqueous electrolyte. In particular, they disclose at col. 1, line 62 to col. 2, line 12 that -- bracketed material added for clarity --:
... water causes [1] a dielectric layer to be worsened, [2]
an internal vapor pressure of the electrolytic capacitor to be increased, and hence, [3] the life of the electrolytic
capacitor is worsened .... To solve the matter, it is known that ammonium formate is used as solute as disclosed in the Japanese patent publication No. 54-1023; ammonium propionate is used as a solute as disclosed in the Japanese patent publication No. 53-138047. However, when organic monocarboxylic acid salts of ammonium ... are dissolved in a proton accepting solvent [like ethylene glycol], an esterification ... is caused at high temperature and such an ester ... does not remain in an ionic state and does not contribute to a conductivity and hence a high conductivity is not obtained.

In view of this explanation, Shinozaki et al. clearly teach away from using an ammonium salt of monocarboxylic acid in an aqueous electrolyte solution for electrolytic capacitors.

It is known that the water content in an electrolyte is critical to capacitor performance. In particular, there are three factors that need to be considered when determining the electrolyte water content for electrolytic capacitors:
1) Water degrades capacitor properties and causes failure by reacting with the oxide (anode) and the metal (cathode). Increased temperatures accelerate these reactions. Therefore, the capacitor rated temperature and life should be considered when determining the water content.
2) On the other hand, water is needed to form an oxide on the unformed areas of an anode after the capacitor is assembled. Water is also needed to reform the oxide during capacitor usage.
3) Water is the best solvent for electrolyte electrical conductivity, particularly for tantalum capacitors that require high electrolyte conductivity.

The reactivity towards water is different between the valve metals. Aluminum oxide is more reactive towards water than tantalum oxide. For this reason, the water content in aluminum electrolytic capacitors is kept low in order to minimize the water-aluminum and water-aluminum oxide reactions, especially for capacitors rated at higher temperatures. Tantalum and its oxide are much more stable against water attack and can be used with an electrolyte having higher water content while still providing satisfactory performance.

Although tantalum and tantalum oxide are quite low in reactivity towards water, for certain critical applications, such as implantable cardioverter defibrillators, even a minimal change in the capacitor's electrical properties may be unacceptable and require improvement.

### SUMMARY OF THE INVENTION

Accordingly, the present invention is directed to an electrolyte composition for electrolytic capacitors, particularly those containing a tantalum anode. The electrolyte composition comprises at least a solute comprising ammonium acetate or other salts of weak inorganic acids or an ammonium salt of a carboxylic acid having less than 10 carbon atoms; and water.

### DETAILED DESCRIPTION OF THE INVENTION

The present invention is directed to electrolyte compositions for high voltage electrolytic capacitors, particularly for tantalum electrolytic capacitors and electrolytic-electrochemical hybrid capacitors, containing sintered tantalum powder pellet anodes. Electrolytes of the present invention provide: 1) a relatively high breakdown voltage that allow tantalum electrolytic capacitors to be operated at up to about 400 volts, or greater; 2) a relatively high conductivity for low capacitor ESR, especially for sintered powder pellet anodes, while supporting high voltages; and 3) a relatively long capacitor shelf life and stable long-term performance by optimizing the pH while using additives to minimize degradation of the electrode materials. The electrolytes of the present invention may also be used for electrolytic capacitors of other valve metals including, but not limited to, aluminum, niobium, titanium, zirconium, hafnium, and alloys thereof.

The electrolyte composition of the present invention comprises at least ammonium acetate or the salt of a weak inorganic acid or the ammonium salt of a carboxylic acid having less than 10 carbon atoms; and up to 90 weight or volume percent water. The above listing is the fundamental components of the present invention.

The electrolyte composition can also comprise a protic and/or aprotic solvent as a second solvent, and at least one additive. The second solvent can be a single solvent or a mixture of two or more solvents. Examples of protic solvents include, but are not limited to, glycols (*e.g*.; ethylene glycol, diethylene glycol, propylene glycol, dipropylene glycol, glycerol, 2-methyl-1,3-propandoil, tetraethylene glycol), polyalkylene glycols (*e.g.*; polyethylene glycols, polypropylene glycols, polyethylene polypropylene glycol copolymers), and glycol ethers (*e.g.*; ethylene glycol methyl ether, ethylene glycol ethyl ether, diethylene glycol methyl ether, diethylene glycol ethyl ether, dipropylene glycol methyl ether, tripropylene glycol methyl ether, ethylene glycol dimethyl ether, triethylene glycol dimethyl ether). Examples of aprotic solvents include, but are not limited to, amides (*e.g.*; N-ethylformamide, N-methylformamide, N,N-dimethylformamide, N-methylacetamide, N,N-dimethylacetamide, N-methylpyrrolidone), esters (*e.g.*; ethyl lactate, ethylene diacetate), nitriles (*e.g.*; acetonitrile, propionitrile, methoxypropionitriie), lactones (*e.g.*; γ-butyrolatone, γ-valerolactone), carbonates (*e.g.*; dimethyl carbonate, ethylene carbonate, propylene carbonate, ethyl propyl carbonate, isopropyl methyl carbonate), and sulfolans (sulfolane; 3-methylsulfolane, dimethylsulfolane).

Ammonium acetate and acetic acid are the preferred main solute in the instant invention. These solutes may be substituted with other weak inorganic acids and/or carboxylic acids having less than 10 carbon atoms, and their ammonium salts. Examples of this include, but are not limited to, ammonium phosphate, ammonium borate, propionic acid, butyric acid, methylbutyric acid, iso-butyric acid, and trimethylacetic acid, and their ammonium salts. The salts provide the necessary electrical conductivity while the acids are used to adjust pH. Mixed solutes can also be used. If ammonium salts are unavailable, they can be prepared by mixing in situ ammonium hydroxide and the corresponding acid.

The electrolyte's pH affects capacitor performance stability by altering the rate of the water-Ta/oxide reactions. The pH should be from about 3 to about 6. When salts are used, acids are added to adjust the pH. When an acid and ammonium hydroxide are used to produce the desired ammonium salt *in situ,* the acid to ammonium hydroxide molar ratio should be greater than 1:1.

The rate of the water-metal/oxide reactions is a function of the electrolyte's pH. A suitable electrolyte pH can minimizes the water-metal/oxide reaction and improves capacitor long-term stability. Therefore, another purpose of the present invention is to design an electrolyte for tantalum capacitors having a suitable pH to improve long-term performance and stability.

Additives that form stable surface bonds with metal/oxide surfaces and minimize water attack can also reduce water-metal/oxide reactions. Another purpose of the present invention is, therefore, to design electrolytes for tantalum capacitors that include certain additives to improve the long-term capacitor performance and stability. Suitable electrolyte additives include, but are not limited to, phosphoric acid, hypophosphorous acid, inorganic or organic phosphates (*e.g.*; ammonium dihydrogen phosphate, trimethyl phosphate, triethyl phosphate), inorganic or organic silicates (*e.g.*; sodium silicate, tetramethyl orthosilicate, tetraethyl orthosilicate), and depolarizers (*e.g.*; nitrophenol, nitroanisple, nitroacetophenone, nitrobenzaldehyde, nitrobenzamide, nitrobenzoic acid, nitrobenzyl alcohol), at concentrations up to 5 weight percent, preferably up to 1 weight percent.

Electrolytes of the present invention provide the high conductivity needed for sintered pellet type anodes and are capable of operating at up to 400 volts, or higher. Capacitors with these electrolytes show good shelf stability at elevated temperatures, stable long-term performance, and low ESR.

The table below lists some examples of electrolytes according to the present invention.

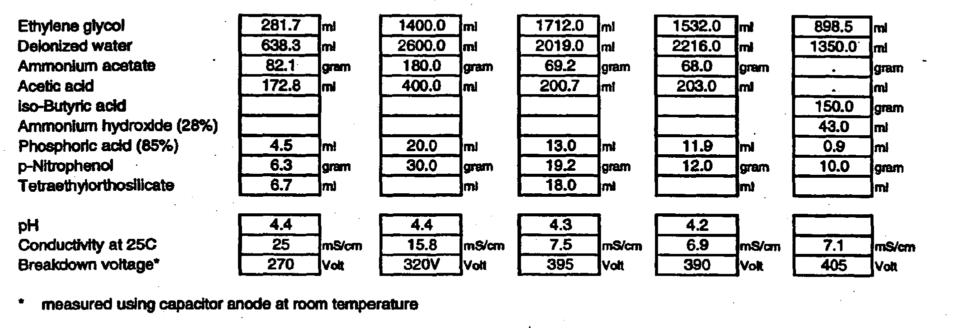

The present invention has been described with reference to particular embodiments thereof. It will be understood that modifications may be made by those skilled in the art without departing from the spirit and scope of the present invention, in accordance with the claims appended hereto.

## Claims

1. An electrolyte composition for electrolytic capacitors which comprises:
a) a first solute selected from the group consisting of weak inorganic acids, C₁ to C₁₀ straight or branched chain carboxylic acids, preferably monocarboxylic acids, their substituted or unsubstituted ammonium salts, and mixtures thereof;
b) water as a first solvent.

2. The electrolyte composition of Claim 1 wherein the pH of the electrolyte ranges from 3 to 6.

3. The electrolyte composition of Claim 2 wherein the pH is less than 5.

4. The electrolyte composition of any one of the preceding claims wherein the breakdown voltage of the electrolyte composition on a valve metal anode exceeds 250 volts, preferably exceeds 350 volts, preferably exceeds 400 volts.

5. The electrolyte composition of any one of the preceding claims further comprising a second solvent selected from the group consisting of glycols, polyalkylene glycols, glycol ethers, amides, esters, nitriles, lactones, carbonates, sulfolans, and mixtures thereof.

6. The electrolyte composition of any one of the preceding claims wherein the concentration of water is up to 90 weight or volume percent of the composition.

7. The electrolyte composition of any one of the preceding claims wherein the solute is selected from the group consisting of acetic acid, phosphoric acid, boric acid, propionic acid, butyric acid, methylbutyric acid, iso-butyric acid, trimethylacetic acid, and the ammonium salts thereof.

8. The electrolyte composition of any one of the preceding claims wherein ammonium salts are characterized as having been formed *in situ* by mixing ammonium hydroxide with at least one of the acids.

9. The electrolyte composition of Claim 8 wherein the acid to ammonium hydroxide molar ratio in the electrolyte composition is greater than 1:1.

10. The electrolyte composition of any one of the preceding claims further comprising up to 5 weight percent of an additive

11. The electrolyte composition of Claim 10 wherein the additive is selected from the group consisting of phosphoric acid, hypophosphorous acid, inorganic or organic phosphates, inorganic or organic silicates, and nitro aromatic depolarisers.

12. A method of using an electrolyte composition, comprising the steps of:
a) forming an electrolyte composition according to any one of Claims 1 to 11;
b) fabricating an anode of a valve metal into a predetermined shape for an electrical application; and
c) contacting the valve metal anode and a cathode with the electrolyte composition.

13. An electrical energy storage device, comprising:
a) an electrolyte according to any one of Claims 1 to 11; and
b) an electrolyte capacitor that comprises at least a valve metal.

14. Use of a composition according to any one of Claims 1 to 11 as an electrolyte composition in association with at least one valve metal.
